# EUROPÄISCHE PATENTSCHRIFT

(11) **EP 3 369 524 B1**
(45) Veröffentlichungstag und Bekanntmachung des Hinweises auf die Patenterteilung: **07.06.2023**
(21) Anmeldenummer: 18158620.7
(22) Anmeldetag: 26.02.2018
(51) Int. Cl.: B23Q 1/00

(54) **NULLPUNKT-SPANNVORRICHTUNG**
ZERO POINT CLAMPING DEVICE
DISPOSITIF DE SERRAGE À POINT ZÉRO

(30) Priorität: 03.03.2017 CH 2632017
(43) Veröffentlichungstag der Anmeldung: 05.09.2018
(73) Patentinhaber: Mosig, Dieter, 6010 Kriens (CH)
(72) Erfinder: Mosig, Dieter, 6010 Kriens (CH)
(74) Vertreter: Keller Schneider Patent- und Markenanwälte AG

(56) Entgegenhaltungen:
- EP-A1- 2 036 662
- WO-A1-03/039807
- DE-A1- 3 437 604

## Beschreibung

### Technisches Gebiet

Die vorliegende Erfindung beschreibt eine Nullpunkt-Spannvorrichtung zum positionsgenauen Festspannen eines ersten Bauteils mit einer Aufspannplatte an einem zweiten Bauteil mit einem Aufnahmebolzen, wobei der Aufnahmebolzen in eine Aufnahmeöffnung in der Aufspannplatte entlang einer Längsrichtung einbringbar ist und mittels eines Spannmechanismus umfassend einen Spannbolzen in der Aufnahmeöffnung örtlich fixiert einspannbar ist.

### Stand der Technik

Nullpunkt-Spannvorrichtungen zum positionsgenauen Festspannen eines ersten Bauteils an einem zweiten Bauteil sind bekannt und werden häufig auf Maschinen montiert genutzt, um ein Werkstück mit einem definierten Nullpunkt platziert zur Bearbeitung zu halten.

Eine Nullpunkt-Spannvorrichtung ist aus der EP2595778 bekannt. Das erste Bauteil umfasst eine zylindrische Aufnahmeöffnung in einer Aufspannplatte und das zweite Bauteil weist einen zylindrischen Aufnahmebolzen mit einem geringeren Durchmesser als die Aufnahmeöffnung auf, welcher in die Aufnahmeöffnung einbringbar ist und in dieser in einer definierten Position durch einen Spannmechanismus gehalten wird. Der Spannmechanismus umfasst einen Spannbolzen, welcher in eine Nut am Aufnahmebolzen eingreift, eine definierte Höhenfixierung relativ zur Aufspannplatte erreicht und ein Herausrutschen des Aufnahmebolzens aus der Aufnahmeöffnung verhindert. Um zu gewährleisten, dass der Aufnahmebolzen nicht ungewollt in Längsrichtung der Nullpunkt-Spannvorrichtung aus der Aufnahmeöffnung in der Aufspannplatte rutschen kann, ist die Aufnahmeöffnung bzw. der Querschnitt der Aufnahmeöffnung als Langloch ausgeführt. Der zylinderförmig ausgestaltete Aufnahmebolzen wird in Längsrichtung der Nullpunkt-Spannvorrichtung in die Aufnahmeöffnung eingeführt, wobei die Aufnahmeöffnung einen grösseren Querschnitt aufweist, als der Aufnahmebolzen. Anschliessend erfolgt ein Einspannen durch den Spannmechanismus, genauer den Spannbolzen in radialer oder lateraler Richtung bis zu einer Anschlagfläche vom Zentrum in Richtung des Radius der Aufnahmeöffnung versetzt. Der Spannvorgang in radialer Richtung drückt den Aufnahmebolzen vom Zentrum der Aufnahmeöffnung bis an eine radial vom Zentrum versetzte Anlagefläche. In dieser Position bleibt der Aufnahmebolzen, gespannt durch den Spannbolzen in der Aufnahmeöffnung örtlich fixiert eingespannt. Der Mittelpunkt des kreisbogenförmigen Anlagebereichs ist gegenüber dem Mittelpunkt des Einführbereichs um einen Betrag versetzt, wodurch die Aufnahmeöffnung als Langloch ausgeführt ist. Durch diese Langlochform aufgrund der Abweichung der Radien, wirkt diese Nullpunkt-Spannvorrichtung unsymmetrisch. Der Anwender muss einen Versatz beim Einspannen des Werkstückes, also des zweiten Bauteils berücksichtigen, da die Halteposition des eingespannten Aufnahmebolzens lateral von der Kernlochposition der Aufnahmeöffnung abweicht. Man hat den Eindruck, dass die extremen Wiederholgenauigkeiten der Einspannung von Werkstücken, oft im Bereich von Mikrometern, nicht wie von anderen Nullpunkt-Spannvorrichtungen einfach erreichbar sind. Durch die radiale Verschiebung des Aufnahmebolzens in der Aufnahmeöffnung ist nicht sicher, ob die Halterung von Werkstücken in dieser Nullpunkt-Spannvorrichtung auch bei hohen Lateralkräften in der x-y-Ebene, während der Bearbeitung ausreichend stabilisiert ist. Es tritt ein erhöhtes laterales Spiel auf.

Andere Nullpunkt-Spannvorrichtungen sind aus WO03/039807, DE3437604 und EP2036662 bekannt, deren Einspanngenauigkeit von Werkstücken aber noch nicht die gewünschten Werte erreicht. Die WO 03/039807 ist die Basis für den Oberbegriff des Anspruchs 1.

### Darstellung der Erfindung

Die vorliegende Erfindung hat sich zur Aufgabe gestellt, eine Nullpunkt-Spannvorrichtung zu schaffen, welche eine erhöhte Einspanngenauigkeit von Werkstücken erreicht, eine maximale laterale Stabilität aufweist und auf eine Gestaltung der Aufnahmeöffnung in Form eines Langloches verzichtet, womit die kommerzielle Akzeptanz erhöht wird.

Diese Aufgabe erfüllt eine Vorrichtung mit den Merkmalen des Patentanspruches 1.

### Kurze Beschreibung der Zeichnungen

Bevorzugte Ausführungsbeispiele des Erfindungsgegenstandes werden nachstehend im Zusammenhang mit den anliegenden Zeichnungen beschrieben.
- Fig. 1a: zeigt eine Ausführungsform einer Nullpunkt-Spannvorrichtung mit einer Aufspannplatte und einem Aufnahmebolzen, wobei die Aufspannplatte in einer Längsschnittdarstellung und der Aufnahmebolzen mit angedeutetem Werkstück in einer Seitenansicht vor dem Einspannprozess dargestellt sind, während
- Fig. 1b: einen Längsschnitt der Nullpunkt-Spannvorrichtung gemäss Figur 1a zeigt, wobei der Aufnahmebolzen in einer Aufnahmeöffnung eingespannt ist.
- Fig. 1c: zeigt eine Detailschnittansicht der Aufnahmeöffnung aus Figur 1a an einem Übergang zwischen Aufspannplatte und einem Aufspannplatteneinsatz, während
- Fig. 1d: eine Detailansicht des Aufnahmebolzens aus Figur 1a im Bereich eines zweiten Bolzenabschnittes zeigt.
- Fig. 2a bis: 2d zeigen eine nicht erfindungsgemässe zweite Ausführungsform einer Nullpunkt-Spannvorrichtung in Darstellungen analog zu den Figuren 1a bis 1d, wobei die Aufnahmeöffnung und der Aufnahmebolzen konisch ausgeführt sind, während die
- Fig. 3a bis 3d: eine nicht erfindungsgemässe dritte Ausführungsform einer Nullpunkt-Spannvorrichtung zeigen, wobei Aufnahmeöffnung und Aufnahmebolzen jeweils einen zylindrischen und einen konisch ausgeführten Abschnitt aufweisen.

### Beschreibung

Erfindungsgemässe Nullpunkt-Spannvorrichtungen 0 werden in der Fertigung von Werkstücken, aber auch für Messvorgänge eingesetzt. Die Nullpunkt-Spannvorrichtung 0 setzt sich aus einer Aufspannpatte 1, welche an einem ersten Bauteil (nicht dargestellt) befestigbar ist, und einem Aufnahmebolzen 2, welcher an einem zweiten Bauteil oder Werkstück (nicht dargestellt) befestigbar ist, zusammen. Mittels eines Spannmechanismus 3 ist der Aufnahmebolzen 2 in einer Aufnahmeöffnung 10 exakt definiert örtlich fixiert befestigbar.

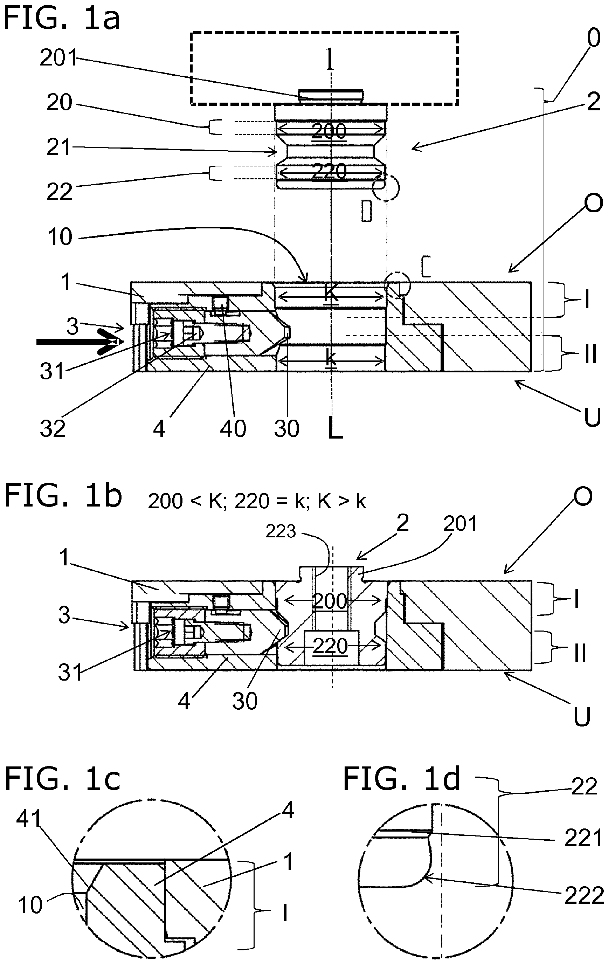

Hier werden die Gemeinsamkeiten der Ausführungsformen der erfindungsgemässen Nullpunkt-Spannvorrichtung 0 am Beispiel der Figuren 1a bis 1d beschrieben, bevor auf die Unterschiede der Ausführungsformen im Detail eingegangen wird. Dabei bezeichnen in den weiteren Figuren gleiche Bezugszeichen die gleichen Bauteile.

Der Spannmechanismus 3 ist mittels Gewindestift mit Zapfen 40 am Aufspannplatteneinsatz 4 und der Aufspannplatte 1 befestigt. Der Spannmechanismus 3 weist einen quer zur Längsrichtung der Aufspannplatte 1 und damit zur Längsrichtung der Aufnahmeöffnung 10 bewegbaren Spannbolzen 30 auf, dessen Bewegungsrichtung mit einem Pfeil in Figur 1a angedeutet ist. Mit einer Spannschraube 31 und einer Schraube 32 ist der Spannmechanismus 3 hier ausgeführt, wobei andere aufwändigere Möglichkeiten für die Ausgestaltung des Spannmechanismus 3 bestehen.

Es ist entscheidend, dass ein möglichst exakter Formschluss des Aufnahmebolzens 2 in der Aufnahmeöffnung 10 erfolgt, wodurch das Werkstück exakt positioniert fixierbar ist. Der Aufnahmebolzen 2 soll in der Aufnahmeöffnung 10 nach Einführung in Längsrichtung L der Aufspannplatte 1 bzw. der Aufnahmeöffnung 10 mit einer hohen Wiederholtoleranz von teilweise weniger Mikrometer lateral örtlich fixiert werden, wobei hohe Haltekräfte gewünscht sind, dass auch in lateraler Richtung, senkrecht zur Längsrichtung L kaum Spiel auftritt.

Da die Aufspannplatte 1 hier mit einem Aufspannplatteneinsatz 4 verbunden ist, erstreckt sich die Aufnahmeöffnung 10 durch die Aufspannplatte 1 und den Aufspannplatteneinsatz 4 und ist als Durchgangsloch ausgestaltet. Der Aufspannplatteneinsatz 4 könnte aber auch weggelassen werden, der Spannmechanismus 3 direkt mit der Aufspannplatte 1 verbunden werden und entsprechend die Aufnahmeöffnung 10 ausschliesslich in der Aufspannplatte 1 ausgespart sein.

Die Aufnahmeöffnung 10 weist in ihrem Verlauf in Längsrichtung Leinen ersten Öffnungsabschnitt I mit einem Einführlochdurchmesser K auf. Dieser erste Öffnungsabschnitt I ist einer Oberseite O der Aufspannplatte 1 zugewandt. In einem zweiten Öffnungsabschnitt II der Aufnahmeöffnung 10 weist die Aufnahmeöffnung 10 einen Kernlochdurchmesser k auf, welcher einer Unterseite U der Aufspannplatte 1 zugewandt ist. Die Aufnahmeöffnung 10 weist eine durchgehende Längsachse in Längsrichtung L verlaufend auf.

Der Aufnahmebolzen 2, welcher an einem zweiten Bauteil oder einem Werkstück, wie mit gestrichelten Linien angedeutet, befestigt werden kann, weist zwei in Längsrichtung I des Aufnahmebolzens 2 versetzte Abschnitte auf.

Ein erster Bolzenabschnitt 20 ist dem zweiten Bauteil zugewandt angeordnet, woran sich, beabstandet von einer umlaufenden Nut 21, ein zweiter Bolzenabschnitt 22 in Längsrichtung I versetzt anschliesst. Der erste Bolzenabschnitt 20 ist zylindrisch geformt und weist einen ersten Aufnahmebolzendurchmesser 200 auf, welcher kleiner als der Einführlochdurchmesser K der Aufnahmeöffnung 10 ist. Der erste Bolzenabschnitt 20 kommt nach Einführung des Aufnahmebolzens 2 in die Aufnahmeöffnung 10 im ersten Öffnungsabschnitt I der Aufnahmeöffnung 10, umgeben vom ersten Öffnungsabschnitt I umgeben, zu liegen, wenn der Aufnahmebolzen 2 in Lagerstellung eingeführt ist. Der erste Bolzenabschnitt 20 ist bei Aufnahmebolzen 2 in Lagerstellung vom ersten Öffnungsabschnitt I formschlüssig umgeben.

Die umlaufende Nut 21 ist derart geformt, dass der Spannbolzen 30 des Spannmechanismus 3 senkrecht zur Längsrichtung L in die umlaufende Nut 21 eingreifen kann und den Aufnahmebolzen 2 in einer Haltestellung örtlich fixiert halten kann. Die umlaufende Nut 21 ist üblicherweise als Keilnut gestaltet.

Der zweite Bolzenabschnitt 22, der zylindrisch geformt ausgestaltet ist, weist einen zweiten Aufnahmebolzendurchmesser 220 auf. In der Lagerstellung des Aufnahmebolzens 2 wird der zweite Bolzenabschnitt 22 vom zweiten Öffnungsabschnitt II formschlüssig umgeben. Damit der Aufnahmebolzen 2 in die Aufnahmeöffnung 10 einführbar ist, darf der zweite Aufnahmebolzendurchmesser 220 maximal so gross, wie der Kernlochdurchmesser k des zweiten Öffnungsabschnittes II der Aufnahmeöffnung 10 sein.

Hier ist zur Befestigung des Aufnahmebolzens 2 an einem Werkstück ein Positionierkragen 201 am ersten Bolzenabschnitt 20 angeformt, welcher in eine entsprechende Bohrung im Werkstück einführbar ist. Mittels eines Durchgangsloches 223 mit einem Innengewinde, welches den ersten und zweiten Bolzenabschnitt 20, 22 quert, kann der Aufnahmebolzen 2 am Werkstück festgeschraubt werden.

Um das zentrische Einführen bzw. Einfädeln des Aufnahmebolzens 2 mit dem zweiten Bolzenabschnitt 22 in die Aufnahmeöffnung 10 zu erleichtern, wobei die Längsrichtung I des Aufnahmebolzens 2 und die Längsrichtung L der Aufnahmeöffnung 1 in Deckung gebracht werden, kann eine Einführfase 222 am Endbereich des zweiten Bolzenabschnittes 22 angeordnet sein. Im Bereich der Einführfase 222 ist der zweite Bolzenabschnitt 22 bzw. der Aufnahmebolzendurchmesser 220 noch verjüngt.

Beim Einführen des Aufnahmebolzens 2 in die Aufnahmeöffnung 10 und bei seiner Lagerstellung, wirken erster Öffnungsabschnitt I mit erstem Bolzenabschnitt 20 und zweiter Öffnungsabschnitt II mit zweitem Bolzenabschnitt 22 zusammen. Die hier vorgestellten erfindungsgemässen Ausführungsformen haben gemeinsam, dass der Aufnahmebolzen 2 zentriert in die Aufnahmeöffnung 10 einführbar und dort lagerbar ist, wobei die Längsrichtung I des Aufnahmebolzens 2 und Längsrichtung L der Aufnahmeöffnung 10 deckungsgleich übereinander liegen, womit eine gemeinsame Zentrierachse gebildet ist. Mindestens der zweite Bolzenabschnitt 22 ist im zweiten Öffnungsabschnitt II formschlüssig umgeben gelagert und ist mittels Spannbolzen in eine Einspannstellung bringbar.

Optional kann am Rand der Aufnahmeöffnung 10, der Oberseite O zugewandt, eine Fase 41 oder ein Einführradius angeformt sein, mittels welcher das Einbringen des zweiten Bolzenabschnittes 22 in die Aufnahmeöffnung 10 erleichtert wird.

Weiterhin kann auch am zweiten Bolzenabschnitt 22 des Aufnahmebolzens 2 eine Einschnürung 221 und/oder eine Einführfase 222 oder ein umlaufender Radius vorgesehen sein. Damit wird der Aufnahmebolzen 2 bei der Einführung in seine Lagerstellung unterstützend ausgerichtet.

### Doppelzylindrisch

In der ersten Ausführungsform, wie in den Figuren 1a bis 1d gezeigt, weist die Aufnahmeöffnung 1 einen zylindrisch ausgesparten ersten Öffnungsabschnitt I und einen zylindrisch ausgesparten zweiten Öffnungsabschnitt II auf, wobei der Einführlochdurchmesser K grösser als der Kernlochdurchmesser k ausgeführt ist. Die Aufnahmeöffnung 1 ist doppelzylindrisch ausgespart ausgeführt, wobei die Durchmesser beider Öffnungsabschnitte I, II unterschiedlich ausgeführt sind.

Der passende Aufnahmebolzen 2 weist einen zylindrisch geformten ersten Bolzenabschnitt 20 und einen, von der umlaufenden Nut 21 getrennten zylindrisch geformten zweiten Bolzenabschnitt 22 auf. Der Aufnahmebolzen 2 ist ebenfalls doppelzylindrisch ausgeführt, wobei erster Aufnahmebolzendurchmesser 200 des ersten Bolzenabschnittes 20 und zweiter Aufnahmebolzendurchmesser 220 des zweiten Bolzenabschnittes 22 gleich gross ausgeführt sind. Der Aufnahmebolzen 2 und die Aufnahmeöffnung 1 sind damit beide doppelzylindrisch ausgeführt.

Der erste Aufnahmebolzendurchmesser 200 ist kleiner als der Einführlochdurchmesser K des ersten Öffnungsabschnittes I ausgeführt, während der zweite Aufnahmebolzendurchmesser 220 gleich gross wie der Kernlochdurchmesser k ausgestaltet ist. In der Lagerstellung des Aufnahmebolzens 2 in der Aufnahmeöffnung 10, wie in Figur 1b gezeigt, ist der zweite Bolzenabschnitt 22 formschlüssig im zweiten Öffnungsabschnitt II gelagert.

### Konisch

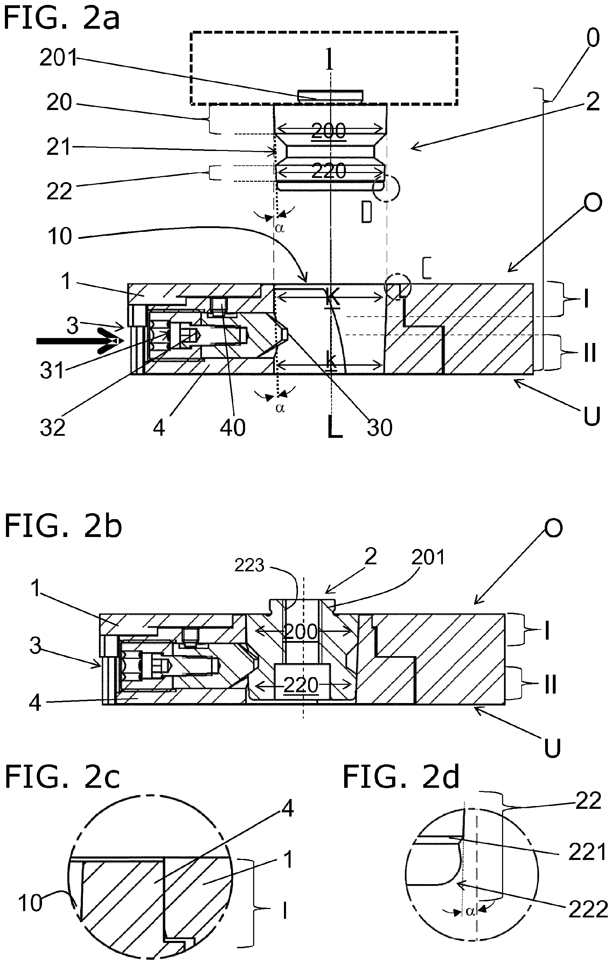

In der nicht erfindungsgemässe zweiten Ausführungsform, wie in den Figuren 2 gezeigt, ist die Aufnahmeöffnung 1 konisch verlaufend vom ersten Öffnungsabschnitt I mit einem Einführlochdurchmesser K bis zum zweiten Öffnungsabschnitt II mit Kernlochdurchmesser k ausgespart ausgeführt und der Durchmesser des Aufnahmebolzens 2 verläuft passend dazu ebenfalls konisch. In der Lagerstellung sind erster Bolzenabschnitt 20 und zweiter Bolzenabschnitt 22 jeweils formschlüssig vom ersten Öffnungsabschnitt I und zweiten Öffnungsabschnitt II umgeben gehalten. Der erste Aufnahmebolzendurchmesser 200 im ersten Bolzenabschnitt 20 ist gleich dem Einführlochdurchmesser K im ersten Öffnungsabschnitt I ausgeführt, sodass eine formschlüssige Verbindung entsteht.

Die Aufnahmeöffnung 10 und der Aufnahmebolzen 2 sind als gerade Kreiskegel bzw. Kegelstümpfe ausgeführt, wobei die halben Öffnungswinkel hier mit 2° gewählt sind. Mit diesem halben Öffnungswinkel verjüngen sich die Aufnahmeöffnung 1 vom Einführlochdurchmesser K bis zum Kernlochdurchmesser k und der Aufnahmebolzen 2 vom ersten Aufnahmebolzendurchmesser 200 bis zum zweiten Aufnahmebolzendurchmesser 220. Die Längsrichtung L der Aufspannplatte 1 bzw. der Aufnahmeöffnung 10 und die Bolzenlängsrichtung I fluchten beim Einführen des Aufnahmebolzens 2 in die Aufnahmeöffnung 10.

### Zylinder-Konus

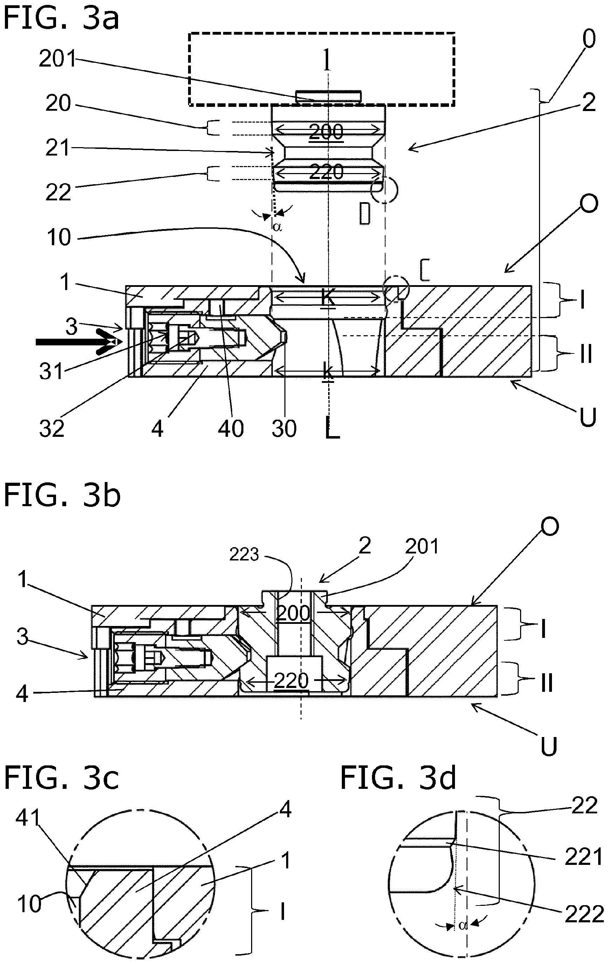

In einer nicht erfindungsgemässen dritten Ausführungsform, wie in den Figuren 3 gezeigt, ist die Aufnahmeöffnung 1 im ersten Öffnungsabschnitt I und der erste Bolzenabschnitt 20 jeweils zylindrisch ausgestaltet, wobei der erste Öffnungsabschnitt I einen konstanten Einführlochdurchmesser K aufweist und der erste Bolzenabschnitt 20 einen konstanten ersten Aufnahmebolzendurchmesser 200 aufweist.

Der zweite Öffnungsabschnitt II der Aufnahmeöffnung 1 ist ebenfalls zylindrisch ausgeführt, wobei der Kernlochdurchmesser k dem Einführlochdurchmesser K entspricht.

Der zweite Bolzenabschnitt 22 des Aufnahmebolzens 2 ist konisch verjüngt ausgestaltet, als gerader Kreiskegel bzw. Kegelstumpf, wobei der halbe Öffnungswinkel hier mit mindestens 2° gewählt ist. In der Lagerstellung des Aufnahmebolzens 2, nach in Längsrichtung L zentrierter Einbringung des Aufnahmebolzens in die Aufnahmeöffnung 1 ist der erste Bolzenabschnitt 20 formschlüssig vom ersten Öffnungsabschnitt I umschlossen gehalten. Wahlweise könnte auch nur der zweite Öffnungsabschnitt II ebenfalls konisch als gerader Kreiskegel bzw. Kegelstumpf ausgestaltet sein.

Die Nullpunkt-Spannvorrichtung 1 bzw. die Aufspannplatte 1 kann in einen Maschinentisch integriert sein. Der Aufnahmebolzen 2 kann einfach und schnell montiert und demontiert werden und gewährleistet eine steife und positioniergenaue Fixierung des Aufnahmebolzens 2, welche auch grossen Lateralkräften standhält. Das Einspannen von am Aufnahmebolzen 2 fixierten Werkstücken kann mit hoher Wiederholgenauigkeit relativ zur Aufspannplatte 1 erfolgen.

### Bezugszeichenliste

0 Nullpunkt-Spannvorrichtung
1 Aufspannplatte (an einem ersten Bauteil)
   10 Aufnahmeöffnung (kreisförmiger Querschnitt)
   L Längsrichtung
   I erster Öffnungsabschnitt
      K Einführlochdurchmesser (erster Durchmesser (oben)
   II zweiter Öffnungsabschnitt
      k Kernlochdurchmesser (zweiter Durchmesser (unten)
   O Oberseite
   U Unterseite
2 Aufnahmebolzen(an einem zweiten Bauteil)
   I Bolzenlängsrichtung
   20 erster Bolzenabschnitt (zylindrisch)
      200 erster Aufnahmebolzendurchmesser
      201 Positionierkragen (angeformt, in zweites Werkstück einzuführen)
   21 umlaufende Nut
   22 zweiter Bolzenabschnitt
      220 zweiter Aufnahmebolzendurchmesser
      221 Einschnürung
      222 Einführfase
      223 Durchgangsloch mit Innengewinde
3 Spannmechanismus (zum Halten des Aufnahmebolzens in Aufnahmeöffnung, linear, einseitig!)
   30 Spannbolzen (quer zur Längsrichtung der Aufnahmeöffnung bewegbar)
   31 Spannschraube
   32 Schraube
4 Aufspannplatteneinsatz (abgestimmt auf Aufnahmebolzen)
   40 Gewindestift mit Zapfen (zur Befestigung Aufspannplatteneinsatz an Aufspannplatte)
   41 Fase

## Patentansprüche

1. Nullpunkt-Spannvorrichtung zum positionsgenauen Festspannen eines ersten Bauteils mit einer Aufspannplatte (1) an einem zweiten Bauteil mit einem Aufnahmebolzen (2), wobei der Aufnahmebolzen (2) in eine Aufnahmeöffnung (10) in der Aufspannplatte (1) entlang einer Längsrichtung (L) einbringbar ist und mittels eines Spannmechanismus (3) umfassend einen Spannbolzen (30) in der Aufnahmeöffnung (10) örtlich fixiert einspannbar ist,
wobei die Aufnahmeöffnung (10) entlang ihrer Längsrichtung (L) einen zylindrisch geformten ersten und
einen zylindrisch geformten zweiten Öffnungsabschnitt (I, II) aufweist
und in diese Öffnungsabschnitte (I, II) der Aufnahmebolzen (2) einen zylindrisch oder konisch geformten ersten und zweiten Bolzenabschnitt (20, 22) aufweisend von einer Einführposition in eine Lagerstellung in Richtung der Längsrichtung (L) bringbar ist,
wobei der erste Bolzenabschnitt (20) vom ersten Öffnungsabschnitt (I) und/oder der zweite Bolzenabschnitt (22) vom zweiten Öffnungsabschnitt (II) mindestens teilweise formschlüssig umschliessbar ist und der Aufnahmebolzen (2) lateralbewegungsfrei von der Einführposition in eine Lagerstellung in Richtung Längsrichtung (L) der Aufnahmeöffnung (10) bringbar ist, **dadurch gekennzeichnet, dass** der erste Bolzenabschnitt (20) mit einem ersten Aufnahmebolzendurchmesser (200), der zweite Bolzenabschnitt (22) mit einem zweiten Aufnahmebolzendurchmesser (220), der erste Öffnungsabschnitt (I) mit einem Einführlochdurchmesser (K) und der zweite Öffnungsabschnitt (II) mit einem Kernlochdurchmesser (k) jeweils zylindrisch geformt ausgestaltet sind, wobei beide Aufnahmebolzendurchmesser (200, 220) gleich gross sind, der Einführlochdurchmesser (K) grösser als der Kernlochdurchmesser (k) und beide Aufnahmebolzendurchmesser (200, 220) gleich gross wie der Kernlochdurchmesser (k) sind.

2. Nullpunkt-Spannvorrichtung nach einem der vorhergehenden Ansprüche, wobei am zweiten Bolzenabschnitt (22) eine Einschnürung (221) und eine Einführfase (222) oder ein umlaufender Radius angeordnet sind.

3. Nullpunkt-Spannvorrichtung nach einem der vorhergehenden Ansprüche, wobei am ersten Öffnungsabschnitt (I) der Aufnahmeöffnung (10) eine Fase (41) oder ein Einführradius angeordnet ist.

## Claims

1. Zero-point clamping device for positionally accurate clamping of a first component with a clamping plate (1) on a second component with a receiving bolt (2), wherein the receiving bolt (2) can be introduced into a receiving opening (10) in the clamping plate (1) along a longitudinal direction (L) and can be clamped in a locally fixed manner in the receiving opening (10) by means of a clamping mechanism (3) comprising a clamping bolt (30),
wherein the receiving opening (10) has along its longitudinal direction (L) a cylindrically shaped first and a cylindrically shaped second opening section (I, II) and the receiving bolt (2) having a cylindrically or conically shaped first and second bolt section (20, 22) can be brought into these opening sections (I, II) from an insertion position into a storage position in the direction of the longitudinal direction (L), wherein the first bolt section (20) can be enclosed at least partially in a form-locking manner by the first opening section (I) and/or by the second bolt section (22) can be enclosed at least partially in a form-locking manner by the second opening section (II), and the receiving bolt (2) can be brought, without lateral movement, from the insertion position into a bearing position in the direction of the longitudinal direction (L) of the receiving opening (10),
**characterized in that**
the first bolt section (20) with a first receiving bolt diameter (200), the second bolt section (22) with a second receiving bolt diameter (220), the first opening section (I) with an insertion hole diameter (K) and the second opening section (II) with a core hole diameter (k) are each shaped cylindrically,
wherein both receiving bolt diameters (200, 220) are of the same size, wherein the insertion hole diameter (K) is larger than the core hole diameter (k) and wherein both receiving bolt diameters (200, 220) are of the same size as the core hole diameter (k).

2. Zero point clamping device according to one of the preceding claims, wherein a constriction (221) and an insertion chamfer (222) or a circumferential radius are arranged on the second bolt section (22).

3. Zero point clamping device according to one of the preceding claims, wherein a chamfer (41) or an insertion radius is arranged at the first opening section (I) of the receiving opening (10).

## Revendications

1. Dispositif de serrage au point zéro pour le serrage précis en position d'un premier composant avec une plaque de serrage (1) sur un deuxième composant avec un boulon de réception (2), dans lequel le boulon de réception (2) est configuré afin de pouvoir être introduit dans une ouverture de réception (10) de la plaque de serrage (1) le long d'une direction longitudinale (L) et de pouvoir être serré de manière localement fixe dans l'ouverture de réception (10) au moyen d'un mécanisme de serrage (3) comprenant un boulon de serrage (30),
dans lequel l'ouverture de réception (10) présente le long de sa direction longitudinale (L) une première et une deuxième section d'ouverture (I, II) de forme cylindrique et le boulon de réception (2) comprenant une première et une deuxième section de boulon (20, 22) de forme cylindrique ou conique est configuré pour pouvoir être amené dans ces sections d'ouverture (I, II) d'une position d'insertion à une position de stockage dans la direction de la direction longitudinale (L),
la première section de boulon (20) pouvant être entouré au moins partiellement par complémentarité de forme par le premier tronçon d'ouverture (I) et/ou la deuxième section de boulon (22) pouvant être entouré au moins partiellement par complémentarité de forme par le deuxième tronçon d'ouverture (II), et le verrou de réception (2) pouvant être amené sans mouvement latéral de la position d'insertion dans une position d'appui dans la direction de la direction longitudinale (L) de l'ouverture de réception (10),
**caractérisé en ce que**
la première section de boulon (20) avec un premier diamètre de boulon de réception (200), la deuxième section de boulon (22) avec un deuxième diamètre de boulon de réception (220), la première section d'ouverture (I) avec un diamètre de trou d'insertion (K) et la deuxième section d'ouverture (II) avec un diamètre de trou de noyau (k) ont chacune une forme cylindrique,
dans lequel les deux diamètres de boulon de réception (200, 220) sont de la même taille, dans lequel le diamètre du trou d'insertion (K) est plus grand que le diamètre du trou central (k) et dans lequel les deux diamètres de boulon de réception (200, 220) sont de la même taille que le diamètre du trou central (k).

2. Dispositif de serrage au point zéro selon l'une des revendications précédentes, dans lequel un rétrécissement (221) et un chanfrein d'insertion (222) ou un rayon circonférentiel sont disposés sur la deuxième section de boulon (22).

3. Dispositif de serrage au point zéro selon l'une des revendications précédentes, dans lequel un chanfrein (41) ou un rayon d'insertion est disposé sur la première section d'ouverture (I) de l'ouverture de réception (10).
